# FASCICULE DE BREVET EUROPEEN

(11) **EP 4 278 072 B1**
(45) Date de publication et mention de la délivrance du brevet: **07.05.2025**
(21) Numéro de dépôt: 22704406.2
(22) Date de dépôt: 07.01.2022
(51) Int. Cl.: F01D 15/10

(54) **TURBOMACHINE HYBRIDE À DOUBLE FLUX POUR AÉRONEF, COMPRENANT UN GÉNÉRATEUR/MOTEUR REFROIDI PAR CALODUCS**
HYBRID-TURBOFAN-TRIEBWERK FÜR EIN FLUGZEUG MIT EINEM DURCH WÄRMEROHRE GEKÜHLTEN MOTOR/GENERATOR
HYBRID TURBOFAN ENGINE FOR AN AIRCRAFT, COMPRISING A MOTOR/GENERATOR COOLED BY HEAT PIPES

(30) Priorité: 15.01.2021 FR 2100373
(43) Date de publication de la demande: 22.11.2023
(73) Titulaire: SAFRAN, 75015 Paris (FR); SAFRAN AIRCRAFT ENGINES, 75015 Paris (FR)
(72) Inventeur: SIBILLI, Thierry, 77550 Moissy-Cramayel (FR); MILLIER, Vincent François Georges, 77550 Moissy-Cramayel (FR); GUILLOTEL, Loïc Paul Yves, 77550 Moissy-Cramayel (FR)
(74) Mandataire: Brevalex
(86) Numéro de dépôt international: PCT/FR2022/050048
(87) Numéro de publication internationale: WO 2022/152998

(56) Documents cités:
- US-A1- 2014 165 570
- US-B2- 10 676 205
- US-B2- 10 842 044

## Description

### DOMAINE TECHNIQUE

La présente invention se rapporte au domaine des turbomachines d'aéronef, et en particulier aux conceptions hybrides mettant en œuvre une puissance thermique ainsi qu'une puissance électrique pour entrainer la soufflante en rotation.

### ETAT DE LA TECHNIQUE ANTERIEURE

Une telle conception hybride de turbomachine d'aéronef est par exemple connue du document FR 3 080 607 A1 et du document US10842044.

Pour rappel, la propulsion hybride d'un aéronef comporte un moteur à combustion interne, également dit générateur de gaz, dont la puissance thermique motrice entraîne une soufflante, soit de manière directe via un arbre moteur, soit de manière indirecte à l'aide d'un réducteur de vitesse couplé à cet arbre moteur. La propulsion hybride comporte également un générateur/moteur électrique, connecté à un stockeur d'énergie électrique via un réseau électrique dédié. Le générateur/moteur électrique peut être utilisé, dans un premier mode de fonctionnement, comme moteur électrique qui entraîne la soufflante en rotation, et, dans un second mode de fonctionnement, comme générateur électrique.

Cette architecture de propulsion hybride permet un vol purement électrique dans lequel la soufflante de la turbomachine est entrainée en rotation par le générateur/moteur électrique, tandis que le générateur de gaz est arrêté. Un vol purement thermique est également possible en entrainant la soufflante uniquement avec le générateur de gaz, tandis que le générateur/moteur électrique est alors en mode générateur. Dans ce cas de figure où le générateur/moteur électrique ne fonctionne plus en tant que moteur, mais en tant que générateur électrique, la rotation de la soufflante entraine le générateur qui recharge le stockeur d'énergie électrique, formé habituellement d'une ou plusieurs batteries.

Un vol hybride est également possible, dans lequel la soufflante est entraînée en rotation à la fois par le générateur de gaz, et par le générateur/moteur.

Si l'implantation d'une puissance électrique, en sus de la puissance thermique existante, confère de nombreux avantages à la turbomachine hybride qui en résulte, il subsiste une problématique de gestion thermique du générateur/moteur. En effet, ce composant électrique est susceptible de dégager une chaleur importante, qu'il convient de dissiper au mieux pour garantir des performances et une fiabilité élevées du générateur/moteur. Il existe par conséquent un besoin d'associer au générateur/moteur des moyens de refroidissement performants, fiables et peu encombrants, ne venant pas trop complexifier la conception déjà particulièrement dense de la turbomachine hydride.

### EXPOSÉ DE L'INVENTION

Pour répondre à ce besoin, l'invention a pour objet une turbomachine hybride à double flux pour aéronef, comprenant une soufflante, un générateur/moteur électrique, et un générateur de gaz comprenant une chambre de combustion, la turbomachine étant conçue de sorte que la rotation de la soufflante soit assurée par le générateur/moteur électrique et/ou par le générateur de gaz, la turbomachine comprenant un bec de séparation des flux à partir duquel s'étendent, vers l'aval, une veine primaire équipée à son entrée d'aubes directrices d'entrée, et une veine secondaire équipée d'aubes directrices de sortie, la turbomachine comprenant, entre la soufflante et le bec de séparation des flux, une paroi interne de délimitation d'une veine d'air, située en amont des aubes directrices d'entrée de la veine primaire, et comprenant également, en amont des aubes directrices de sortie, une paroi amont interne de délimitation de la veine secondaire, le générateur/moteur comportant un rotor, et un stator porté par un support de stator fixé à une partie statorique de la turbomachine.

Selon l'invention, la turbomachine hybride comporte en outre une pluralité de caloducs de refroidissement du générateur/moteur électrique, chaque caloduc comportant une section d'évaporation fixée sur le support de stator du générateur/moteur, ainsi qu'une section de condensation fixée sur la paroi interne de délimitation de la veine d'air ou sur la paroi amont interne de délimitation de la veine secondaire, chaque caloduc se présentant sous forme de tube dont les parties d'extrémité opposées sont respectivement formées par la section de condensation et par la section d'évaporation.

L'invention permet la gestion thermique du générateur/moteur à l'aide de caloducs, constituant des moyens de refroidissement performants, fiables et peu encombrants. La chaleur dégagée par le générateur/moteur, transférée directement dans le support de stator de ce générateur/moteur, se trouve ainsi pompée par les caloducs. Ensuite, cette chaleur est évacuée radialement vers l'extérieur dans une/des zones plus froides, au niveau de la paroi interne de délimitation de la veine d'air et/ou au niveau de la paroi amont interne de délimitation de la veine secondaire, où se trouvent fixées les sections de condensation des caloducs.

Grâce à l'emploi de caloducs, l'invention permet d'augmenter les performances de la turbomachine, sans réaliser de prélèvement d'air spécifique. En effet, pour rappel, un caloduc est un système fermé / passif qui permet, en profitant des changements de phase d'un fluide caloporteur, de prélever de la chaleur à un endroit et de la redistribuer à un autre endroit sans utiliser de pompe ou autre artifice mécanique, consommateur d'énergie. Le fonctionnement est tel qu'un liquide est enfermé dans un tube qui est habituellement composé de trois parties, à savoir la section d'évaporation, la section de condensation, et la zone adiabatique. Au niveau de la section d'évaporation, le liquide adopte sa forme gazeuse et se dirige vers la section de condensation où il se reliquéfie. Le liquide est ensuite ramené vers la section d'évaporation grâce au réseau capillaire qui remplit le rôle de moteur du caloduc. Le liquide condensé retourne ainsi vers l'extrémité chaude, dite d'évaporation, par capillarité. Ainsi, avec un caloduc, la chaleur est transférée de la portion chaude à la portion froide par vaporisation de la phase liquide et condensation de la vapeur dans la partie froide du caloduc.

L'emplacement axial des sections de condensation des caloducs, en amont des aubes directrices d'entrée également dénommées aubes IGV (de l'anglais « Inlet Guide Vane »), et/ou en amont des aubes directrices de sortie également dénommées aubes OGV (de l'anglais « Outlet Guide Vane »), permet un fonctionnement très efficace des caloducs, en raison de l'air particulièrement frais qui épouse les sections de condensation dans ces zones de la turbomachine.

L'invention, qui rompt donc avec les conceptions classiques à refroidissement du générateur/moteur par circuit d'air/d'huile, prévoit par ailleurs la mise en œuvre d'au moins l'une des caractéristiques optionnelles suivantes, prises isolément ou en combinaison.

De préférence, les caloducs sont des caloducs capillaires, la section de condensation étant située radialement vers l'extérieur par rapport à la section d'évaporation, et reliée à celle-ci par une zone adiabatique de caloduc s'étendant radialement vers l'extérieur de la section d'évaporation vers la section de condensation.

De préférence, les caloducs sont répartis circonférentiellement autour d'un axe central longitudinal de la turbomachine.

De préférence, les caloducs prennent chacun une forme générale de U, avec les deux branches d'extrémité du U formant respectivement la section d'évaporation et la section de condensation.

Selon un mode de réalisation envisagé, pour certains desdits caloducs, la section de condensation est fixée sur la paroi interne de délimitation de la veine d'air, et pour les autres, la section de condensation est fixée sur la paroi amont interne de délimitation de la veine secondaire.

De préférence, le générateur de gaz est couplé indirectement à la soufflante, par l'intermédiaire d'un réducteur de vitesse.

De préférence, le générateur/moteur est agencé axialement entre la soufflante et le réducteur de vitesse.

De préférence, le rotor du générateur/moteur est couplé en rotation à un organe de sortie du réducteur de vitesse, cet organe de sortie du réducteur étant lui-même couplé en rotation à un moyeu rotatif de soufflante.

De préférence, la section de condensation de chaque caloduc s'étend sur toute la longueur ou sensiblement toute la longueur de sa paroi interne de délimitation associée. De préférence, la partie statorique de la turbomachine, sur laquelle est fixé le support de stator du générateur/moteur, est un carter sur lequel sont montées les aubes directrices d'entrée de la veine primaire.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
[Fig. 1] représente une vue schématique d'un turboréacteur hydride à double flux, en coupe longitudinale ;
[Fig. 2] représente une vue en demi-coupe longitudinale montrant une partie avant du turboréacteur hydride, et incorporant des caloducs spécifiques à la présente invention, mis en œuvre selon un premier mode de réalisation préféré de l'invention ;
[Fig. 3] représente une vue partielle en perspective du turboréacteur hydride selon le premier mode de réalisation préféré de l'invention ;
[Fig. 4] représente une vue en demi-coupe longitudinale analogue à celle de la figure 2, avec le turboréacteur se présentant sous la forme d'un second mode de réalisation préféré de l'invention ; et
[Fig. 5] représente une vue partielle en perspective analogue à celle de la figure 3, avec le turboréacteur se présentant sous la forme d'un troisième mode de réalisation préféré de l'invention.

### EXPOSÉ DÉTAILLÉ DE MODES DE RÉALISATION PRÉFÉRÉS

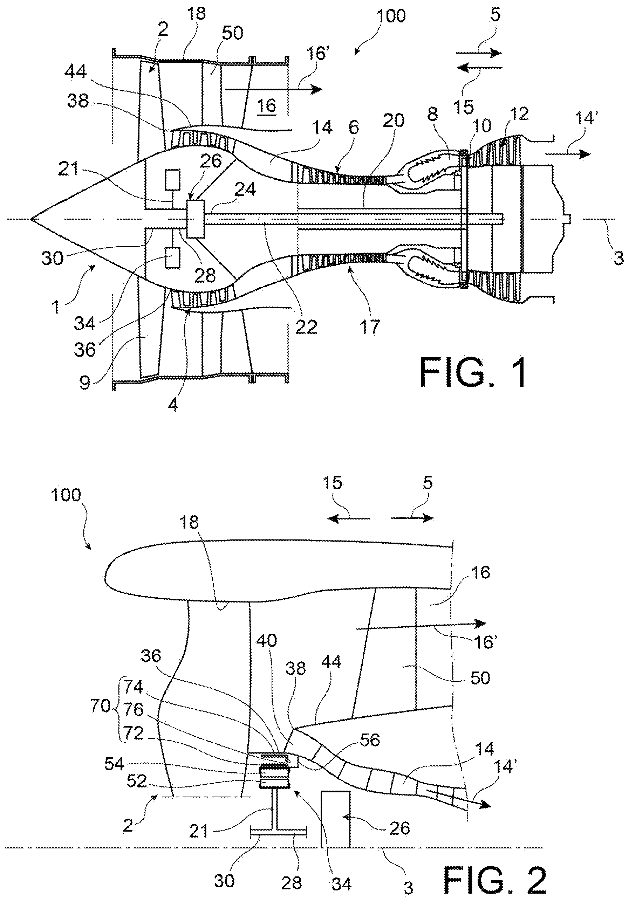

En référence tout d'abord à la figure 1, il est représenté une turbomachine 100 d'aéronef, prenant ici la forme d'un turboréacteur hybride à double flux et à double corps.

Le turboréacteur hydride 100 présente un axe longitudinal 3 autour duquel s'étendent ses différents composants. Elle comprend, d'amont en aval selon une direction principale 5 d'écoulement des gaz à travers cette turbomachine, une soufflante 2, un compresseur basse pression 4, un compresseur haute pression 6, une chambre de combustion 8, une turbine haute pression 10 et une turbine basse pression 12. Ces éléments délimitent une veine primaire 14 traversée par un flux primaire 14', tandis qu'une veine secondaire 16 entoure la veine primaire en étant délimitée vers l'extérieur partiellement par un carter de soufflante 18, et traversée par un flux d'air secondaire 16'. Tous ces éléments constituent, de manière conventionnelle et plus particulièrement les éléments de la veine primaire, un générateur de gaz 17 dont la puissance thermique motrice est destinée à entraîner la soufflante 2 d'une manière qui sera décrite ci-après.

Dans la description qui va suivre, les termes « avant » et « arrière » sont considérés selon une direction 15 opposée à la direction principale 5 d'écoulement des gaz au sein du turboréacteur, et parallèle à l'axe 3. En revanche, les termes « amont » et « aval » sont considérés selon cette même direction principale d'écoulement 5.

Le compresseur haute pression 6 et la turbine haute pression 10 sont reliés par un arbre haute pression 20 centré sur l'axe 3. Ces éléments forment ensemble un corps haute pression du turboréacteur hybride à double flux, et à double corps. De manière analogue, le compresseur basse pression 4 et la turbine basse pression 12 sont reliés par un arbre basse pression 22 également centré sur l'axe 3, et traversant l'arbre haute pression 20. Ces éléments forment ensemble un corps basse pression du turboréacteur hybride 100. A son extrémité avant, l'arbre basse pression 22 est couplé en rotation à un organe d'entrée 24 d'un réducteur de vitesse 26. Cet organe d'entrée 24 est centré sur l'axe 3, et il permet donc de coupler indirectement le générateur de gaz 17 à la soufflante 2. En effet, cette soufflante 2 comporte un moyeu de soufflante 30 centré sur l'axe 3 et couplé en rotation à un organe de sortie 28 du réducteur 26, cet organe de sortie 28 étant également centré sur l'axe 3.

Le réducteur de vitesse 26 peut prendre toute forme connue, par exemple en incorporant un train épicycloïdal avec sa couronne extérieure fixée sur une partie statorique du turboréacteur. La conception de ce réducteur 26 ne sera par conséquent pas davantage détaillée.

De par sa conception hydride, le turboréacteur 100 comporte en plus de son générateur de gaz 17, un générateur/moteur électrique 34, centré sur l'axe 3. Le rotor de ce générateur/moteur 34 est couplé en rotation à l'organe de sortie 28 du réducteur de vitesse 26, et par conséquent également solidaire en rotation du moyeu rotatif de soufflante 30, aussi appelé arbre de soufflante. Le couplage en rotation du rotor du générateur/moteur électrique 34, avec l'organe de sortie 28 du réducteur de vitesse 26, s'effectue par exemple à l'aide d'un flasque ou disque 21 centré sur l'axe 3, ou tout autre élément similaire.

Le générateur/moteur électrique 34 est agencé axialement entre la soufflante 2 et le réducteur de vitesse 26, en se trouvant en effet en aval des aubes de la soufflante 2, et en amont du réducteur 26. Dans cette position axiale particulièrement avancée, le générateur/moteur électrique 34 se trouve entouré d'une paroi interne 36 de délimitation d'une veine annulaire d'air, dite veine d'air totale, en raison de sa localisation amont par rapport à un bec de séparation des flux 38. Ainsi, cette paroi interne 36 de délimitation de la veine d'air totale, correspond à un segment annulaire entourant le générateur/moteur électrique 34 et agencé entre la soufflante et le bec de séparation des flux 38. De manière connue, c'est à partir de ce bec 38 que la veine d'air totale se divise en deux flux concentriques, pour entrer respectivement dans la veine primaire 14 et dans la veine secondaire 16.

La paroi interne 36 se trouve également située en amont d'une rangée annulaire d'aubes directrices d'entrée 40, ou aubes IGV, qui se trouvent elles-mêmes à l'entrée de la veine primaire 14, en étant très proches du bec 38.

En aval de la paroi interne 36, le turboréacteur 100 comporte une paroi amont interne 44 de délimitation de la veine secondaire 16, cette paroi 44 étant située en amont d'une rangée annulaire d'aubes directrices de sortie 50, ou aubes OGV. Comme le montre la figure 1, la paroi amont interne 44 est initiée au niveau du bec de séparation 38, puis s'étend vers l'aval jusqu'aux pieds des d'aubes directrices de sortie 50.

De façon connue, le générateur/moteur électrique 34 peut être utilisé, dans un premier mode de fonctionnement, comme moteur électrique qui entraîne la soufflante 2 en rotation via son moyeu 30, et, dans un second mode de fonctionnement, comme générateur électrique. Pour l'entraînement en rotation de la soufflante en fonctionnement moteur, le générateur/moteur électrique 34 est alimenté par un stockeur d'énergie électrique (non représenté), via un réseau électrique dédié.

Grâce à la propulsion hybride résultant de la combinaison du générateur de gaz 17 et du générateur/moteur électrique 34, il est possible d'effectuer un vol purement électrique dans lequel la soufflante 2 est entrainée en rotation par le générateur/moteur électrique 34, pendant que le générateur de gaz 17 reste à l'arrêt. Un vol purement thermique est également possible, en entrainant la soufflante 2 uniquement avec le générateur de gaz 17 et le réducteur 26, pendant que le générateur/moteur électrique 34 se trouve en mode générateur. Dans ce cas de figure où le générateur/moteur électrique 34 ne fonctionne plus en tant que moteur, mais en tant que générateur électrique, la rotation de la soufflante 2 entraine le générateur 34 qui recharge le stockeur d'énergie électrique.

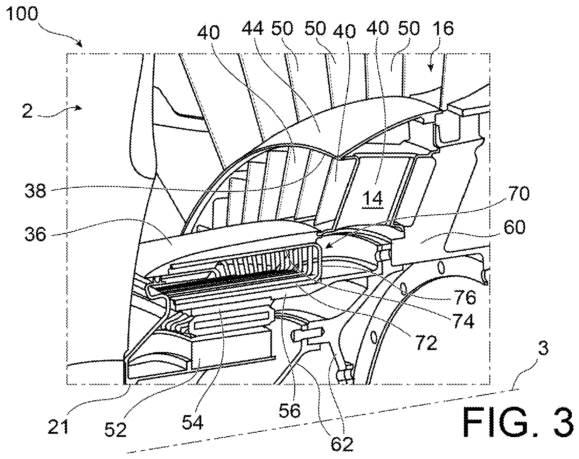

Un vol hybride est également possible, dans lequel la soufflante est entraînée en rotation à la fois par le générateur de gaz 17 via le réducteur 26, et par le générateur/moteur 34. Selon un premier mode de réalisation préféré montré sur les figures 2 et 3, il est représenté plus en détail le générateur/moteur 34, avec son rotor intérieur 52 porté par le flasque / disque 21, et son stator extérieur 54 porté par un support de stator 56. Ce support de stator 56 présente une partie aval recouvrant et enserrant axialement le stator 52, tandis qu'une partie aval de ce support 56 est fixée sur une partie statorique du turboréacteur, ici un carter 60 sur lequel sont montées les aubes directrices d'entrée 14. Cette fixation du support 56 sur le carter 60 s'effectue par exemple par boulons, en prévoyant éventuellement d'enserrer entre eux une ou plusieurs brides de support / de fixation 62, destinées par exemple à coopérer avec les composants du réducteur de vitesse, et/ou avec le moyeu de soufflante 30 pour permettre son guidage en rotation. Pour assurer la gestion thermique du générateur/moteur 34 susceptible de dégager une chaleur importante, l'invention prévoit d'associer à ce composant électrique 34 une pluralité de caloducs 70 pour son refroidissement. Les caloducs 70 sont répartis circonférentiellement de manière à former une rangée annulaire centrée sur l'axe 3, et prévus dans un nombre important, pouvant dépasser plusieurs dizaines, voire plusieurs centaines.

Dans ce premier mode de réalisation préféré, chaque caloduc 70 comporte une section d'évaporation 72 formant une partie d'extrémité, fixée extérieurement sur le support de stator 56 du générateur/moteur électrique 34. La section d'évaporation 72, de forme rectiligne ou sensiblement rectiligne, s'étend ainsi axialement sur une grande partie de la surface extérieure du support de stator 56, sans aller toutefois au-delà du bec de séparation 38 vers l'aval dans la direction axiale.

Chaque caloduc 70 comporte également une section de condensation 74 formant une partie d'extrémité opposée, fixée intérieurement sur la paroi interne 36 de délimitation de la veine annulaire d'air. Ici également, la section de condensation 74, de forme rectiligne ou sensiblement rectiligne, s'étend axialement sur toute la longueur ou sensiblement toute la longueur de la surface intérieure de la paroi interne de délimitation 36.

Ainsi, chaque caloduc 70 se présente sous la forme d'un tube à deux parties d'extrémité se trouvant à distance l'une de l'autre et n'étant pas raccordées l'une à l'autre. Ces parties d'extrémité opposées du tube sont donc respectivement formées par la section de condensation 74 et par la section d'évaporation 72.

Pour relier ces deux sections 72, 74, chaque caloduc 70 comporte une zone adiabatique 76 s'étendant radialement vers l'extérieur en allant de la section d'évaporation 72 vers la section de condensation 74. Les deux sections 72, 74 sont agencées de manière à se recouvrir radialement l'une l'autre, tout en restant espacées selon la direction radiale, de manière à former avec la zone adiabatique 76 un caloduc filaire en forme générale de U, de préférence avec le creux du U ouvert vers l'amont.

Les caloducs capillaires 70 sont individuels en se succédant selon la direction circonférentielle, ou bien ils sont agencés au sein d'une même paroi annulaire intégrant plusieurs caloducs liés les uns aux autres. Chacun des caloducs 70 présente une conception identique ou sensiblement identique.

A titre d'exemples, il s'agit de caloducs capillaires du type (en anglais)

### « Oscillating/Pulsating Heat Pipes », ou encore « Loop Heat Pipes ».

Les caloducs capillaires 70 constituent des dispositifs de dissipation de chaleur à hautes performances, qui permettent ici d'extraire la chaleur du générateur/moteur 34 pour la transférer vers la veine d'air totale en amont du bec de séparation 38, constituant une zone particulièrement froide et donc efficace pour la gestion thermique du générateur/moteur 34. En effet, chaque caloduc 70 permet d'évacuer de fortes densités de flux de chaleur entre deux milieux de températures différentes, ici le générateur/moteur 34 et la paroi interne de délimitation 36. Ce transfert d'énergie s'effectue par l'intermédiaire d'un fluide caloporteur à l'état saturé, comme l'eau. Ce dernier, à l'état liquide, s'évapore au niveau de la zone de chauffage correspondant à la section d'évaporation 72 longeant le support de stator 56. La vapeur, ainsi formée, s'écoule à travers la zone adiabatique 76 pour se condenser dans la section de condensation 74, longeant la paroi interne de délimitation 36. Ainsi, en profitant des changements de phase du fluide caloporteur, le caloduc 70 permet de prélever de la chaleur au niveau du générateur/moteur électrique 34, et de la redistribuer dans la paroi interne de délimitation 36 épousée extérieurement par un flux d'air froid.

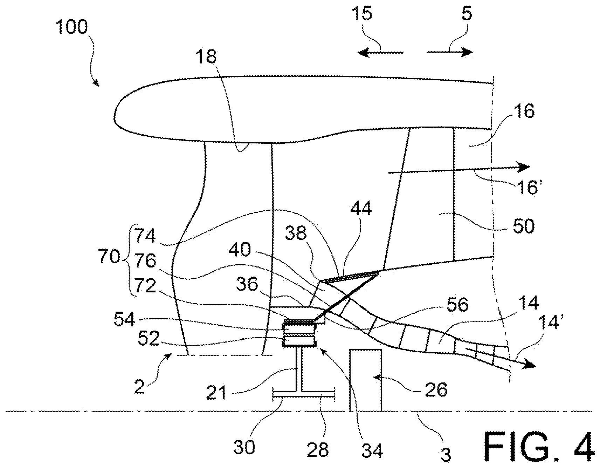

Selon un second mode de réalisation préféré montré sur la figure 4, les caloducs 70 diffèrent de ceux du premier mode par le fait que leur section de condensation 74 s'étend à présent le long de la surface intérieure de la paroi amont interne 44 de délimitation de la veine secondaire 16. Ici aussi, la section de condensation 74, de forme rectiligne ou sensiblement rectiligne, s'étend axialement sur toute la longueur ou sensiblement toute la longueur de la surface intérieure de la paroi amont interne de délimitation 44. De ce fait, la zone adiabatique 76 reliant les deux sections 72, 74 présente une orientation inclinée par rapport à la direction radiale, de façon à s'étendre axialement vers l'aval en allant radialement vers l'extérieur. Il en résulte une forme générale toujours en U pour le caloduc 70, même si ce U ne présente plus de perpendicularité entre sa base formée par la zone adiabatique 76, et ses deux branches d'extrémité formées respectivement par les deux sections 72, 74.

De préférence, chaque zone adiabatique 76 traverse la veine primaire 14 en traversant l'intérieur de l'une des aubes directrices d'entrée 40.

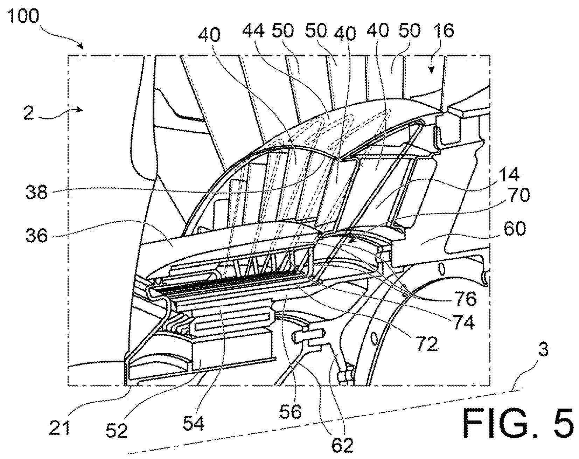

Selon un troisième mode de réalisation préféré de l'invention, montré sur la figure 5, les deux modes de réalisation décrits précédemment sont combinés. En effet, la rangée annulaire de caloducs 70 est formée par des caloducs dont la section de condensation 74 est fixée sur la paroi interne 36, et par d'autres caloducs dont la section de condensation 74 est fixée sur la paroi amont interne 44. Un agencement possible consiste à placer ces deux types de caloducs 70 en alternance selon la direction circonférentielle, comme le montre la figure 5.

Bien entendu, diverses modifications peuvent être apportées par l'homme du métier à l'invention qui vient d'être décrite, uniquement à titre d'exemples non limitatifs, et dans la limite de la portée définie par les revendications annexées.

## Revendications

1. Turbomachine hybride (100) à double flux pour aéronef, comprenant une soufflante (2), un générateur/moteur électrique (34), et un générateur de gaz (17) comprenant une chambre de combustion (8), la turbomachine étant conçue de sorte que la rotation de la soufflante (2) soit assurée par le générateur/moteur électrique (34) et/ou par le générateur de gaz (17), la turbomachine comprenant un bec de séparation des flux (38) à partir duquel s'étendent, vers l'aval, une veine primaire (14) équipée à son entrée d'aubes directrices d'entrée (40), et une veine secondaire (16) équipée d'aubes directrices de sortie (50), la turbomachine comprenant, entre la soufflante (2) et le bec de séparation des flux (38), une paroi interne (36) de délimitation d'une veine d'air, située en amont des aubes directrices d'entrée (40) de la veine primaire, et comprenant également, en amont des aubes directrices de sortie (50), une paroi amont interne (44) de délimitation de la veine secondaire (16), le générateur/moteur (34) comportant un rotor (52), et un stator (54) porté par un support de stator (56) fixé à une partie statorique (60) de la turbomachine,
**caractérisée en ce qu'**elle comporte en outre une pluralité de caloducs (70) de refroidissement du générateur/moteur électrique (34), chaque caloduc (70) comportant une section d'évaporation (72) fixée sur le support de stator (56) du générateur/moteur (34), ainsi qu'une section de condensation (74) fixée sur la paroi interne (36) de délimitation de la veine d'air ou sur la paroi amont interne (44) de délimitation de la veine secondaire (16), chaque caloduc (70) se présentant sous forme de tube dont les parties d'extrémité opposées sont respectivement formées par la section de condensation (74) et par la section d'évaporation (72).

2. Turbomachine selon la revendication 1, **caractérisée en ce que** les caloducs (70) sont des caloducs capillaires, la section de condensation (74) étant située radialement vers l'extérieur par rapport à la section d'évaporation (72), et reliée à celle-ci par une zone adiabatique (76) de caloduc s'étendant radialement vers l'extérieur de la section d'évaporation (72) vers la section de condensation (74).

3. Turbomachine selon la revendication 1 ou 2, **caractérisée en ce que** les caloducs (70) sont répartis circonférentiellement autour d'un axe central longitudinal (3) de la turbomachine.

4. Turbomachine selon l'une quelconque des revendications précédentes, **caractérisée en ce que** les caloducs (70) prennent chacun une forme générale de U, avec les deux branches d'extrémité du U formant respectivement la section d'évaporation (72) et la section de condensation (74).

5. Turbomachine selon l'une quelconque des revendications précédentes, **caractérisée en ce que** pour certains desdits caloducs (70), la section de condensation (74) est fixée sur la paroi interne (36) de délimitation de la veine d'air, et pour les autres, la section de condensation (74) est fixée sur la paroi amont interne (44) de délimitation de la veine secondaire (16).

6. Turbomachine selon l'une quelconque des revendications précédentes, **caractérisée en ce que** le générateur de gaz (17) est couplé indirectement à la soufflante (2), par l'intermédiaire d'un réducteur de vitesse (26).

7. Turbomachine selon la revendication précédente, **caractérisée en ce que** le générateur/moteur (34) est agencé axialement entre la soufflante (2) et le réducteur de vitesse (26).

8. Turbomachine selon la revendication précédente, **caractérisée en ce que** le rotor (52) du générateur/moteur (34) est couplé en rotation à un organe de sortie (28) du réducteur de vitesse (26), cet organe de sortie (28) du réducteur étant lui-même couplé en rotation à un moyeu rotatif de soufflante (30).

9. Turbomachine selon l'une quelconque des revendications précédentes, **caractérisée en ce que** la section de condensation (74) de chaque caloduc (70) s'étend sur toute la longueur ou sensiblement toute la longueur de sa paroi interne de délimitation associée (36, 44).

10. Turbomachine selon l'une quelconque des revendications précédentes, **caractérisée en ce que** la partie statorique (60) de la turbomachine, sur laquelle est fixé le support de stator (56) du générateur/moteur (34), est un carter sur lequel sont montées les aubes directrices d'entrée (40) de la veine primaire (14).

## Patentansprüche

1. Zweiflutige Hybrid-Turbomaschine (100) für Flugzeuge, umfassend ein Gebläse (2), einen Generator/Elektromotor (34) und einen Gasgenerator (17), der eine Brennkammer (8) umfasst, wobei die Turbomaschine so ausgelegt ist, dass die Drehung des Gebläses (2) durch den Generator/Elektromotor (34) und/oder durch den Gasgenerator (17) sichergestellt wird, wobei die Turbomaschine eine Strömungsteilungsdüse (38) umfasst, von der sich stromabwärts ein primärer Strömungskanal (14), der an seinem Einlass mit Einlassleitschaufeln (40) ausgestattet ist, und ein sekundärer Strömungskanal (16), der mit Auslassleitschaufeln (50) ausgestattet ist, erstrecken, wobei die Turbomaschine zwischen dem Gebläse (2) und der Strömungsteilungsdüse (38) eine innere Wand (36) zur Begrenzung eines Luftströmungskanals umfasst, die stromaufwärts der Einlassleitschaufeln (40) des primären Strömungskanals angeordnet ist, und auch stromaufwärts der Auslassleitschaufeln (50) eine stromaufwärts gelegene innere Wand (44) zur Begrenzung des sekundären Strömungskanals (16) umfasst, wobei der Generator/Motor (34) einen Rotor (52) und einen Stator (54) enthält, der von einem Statorträger (56) getragen wird, der an einem Statorteil (60) der Turbomaschine befestigt ist,
**dadurch gekennzeichnet, dass** sie ferner eine Vielzahl von Wärmeleitungen (70) zur Kühlung des Generators/Elektromotors (34) enthält, wobei jede Wärmeleitung (70) einen Verdampfungsabschnitt (72), der am Statorträger (56) des Generators/Motors (34) befestigt ist, sowie einen Kondensationsabschnitt (74) enthält, der an der inneren Wand (36) zur Begrenzung des Luftströmungskanals oder an der inneren Wand (44) zur Begrenzung des sekundären Strömungskanals (16) befestigt ist, wobei jede Wärmeleitung (70) die Form eines Rohrs hat, dessen gegenüberliegende Endteile durch den Kondensationsabschnitt (74) bzw. den Verdampfungsabschnitt (72) gebildet werden.

2. Turbomaschine nach Anspruch 1, **dadurch gekennzeichnet, dass** die Wärmeleitungen (70) Kapillar-Wärmeleitungen sind, wobei der Kondensationsabschnitt (74) in Bezug auf den Verdampfungsabschnitt (72) radial nach außen angeordnet ist und mit diesem durch eine adiabatische Zone (76) einer Wärmeleitung verbunden ist, die sich vom Verdampfungsabschnitt (72) radial nach außen zum Kondensationsabschnitt (74) erstreckt.

3. Turbomaschine nach Anspruch 1 oder 2, **dadurch gekennzeichnet, dass** die Wärmeleitungen (70) in Umfangsrichtung um eine Längsmittelachse (3) der Turbomaschine verteilt sind.

4. Turbomaschine nach einem der vorhergehenden Ansprüche, **dadurch gekennzeichnet, dass** die Wärmeleitungen (70) jeweils eine allgemeine U-Form aufweisen, wobei die beiden Endzweige des U jeweils den Verdampfungsabschnitt (72) und den Kondensationsabschnitt (74) bilden.

5. Turbomaschine nach einem der vorhergehenden Ansprüche, **dadurch gekennzeichnet, dass** bei einigen der Wärmeleitungen (70) der Kondensationsabschnitt (74) an der inneren Wand (36) zur Begrenzung des Luftströmungskanals und bei den anderen der Kondensationsabschnitt (74) an der stromaufwärts gelagerten inneren Wand (44) zur Begrenzung des sekundären Strömungskanals (16) befestigt ist.

6. Turbomaschine nach einem der vorhergehenden Ansprüche, **dadurch gekennzeichnet, dass** der Gasgenerator (17) über ein Untersetzungsgetriebe (26) indirekt mit dem Gebläse (2) gekoppelt ist.

7. Turbomaschine nach dem vorhergehenden Anspruch, **dadurch gekennzeichnet, dass** der Generator/Motor (34) axial zwischen dem Gebläse (2) und dem Untersetzungsgetriebe (26) angeordnet ist.

8. Turbomaschine nach dem vorhergehenden Anspruch, **dadurch gekennzeichnet, dass** der Rotor (52) des Generators/Motors (34) in Drehung mit einem Abtriebselement (28) des Untersetzungsgetriebe (26) gekoppelt ist, wobei das Abtriebselement (28) des Getriebes selbst in Drehung mit einer drehenden Gebläsenabe (30) gekoppelt ist.

9. Turbomaschine nach einem der vorhergehenden Ansprüche, **dadurch gekennzeichnet, dass** sich der Kondensationsabschnitt (74) jeder Wärmeleitung (70) über die gesamte Länge oder im Wesentlichen die gesamte Länge ihrer zugehörigen inneren Begrenzungswand (36, 44) erstreckt.

10. Turbomaschine nach einem der vorhergehenden Ansprüche, **dadurch gekennzeichnet, dass** der Statorteil (60) der Turbomaschine, an dem der Statorträger (56) des Generators/Motors (34) befestigt ist, ein Gehäuse ist, an dem die Einlassleitschaufeln (40) des primären Strömungskanals (14) montiert sind.

## Claims

1. A hybrid turbofan engine (100) for an aircraft, comprising a fan (2), an electric generator/motor (34), and a gas generator (17) comprising a combustion chamber (8), the turbine engine being designed so that the rotation of the fan (2) is ensured by the electric generator/motor (34) and/or by the gas generator (17), the turbine engine comprising a flow splitter nozzle (38) from which extend, downstream, a primary flow path (14) equipped at its inlet with inlet guide vanes (40), and a secondary flow path (16) equipped with outlet guide vanes (50), the turbine engine comprising, between the fan (2) and the flow splitter nozzle (38), an inner boundary wall (36) of an air flow path, located upstream of the inlet guide vanes (40) of the primary flow path, and also comprising, upstream of the outlet guide vanes (50), an inner upstream boundary wall (44) of the secondary flow path (16), the generator/motor (34) including a rotor (52), and a stator (54) carried by a stator support (56) fastened to a stator portion (60) of the turbine engine,
**characterised in that** it further includes a plurality of heat pipes (70) for cooling the electric generator/motor (34), each heat pipe (70) including an evaporator section (72) fastened on the stator support (56) of the generator/motor (34), as well as a condensation section (74) fastened on the inner boundary wall (36) of the air flow path or on the inner upstream boundary wall (44) of the secondary flow path (16), each heat pipe (70) being in the form of a tube whose opposite end portions are respectively formed by the condensation section (74) and by the evaporation section (72).

2. The turbine engine according to claim 1, **characterised in that** the heat pipes (70) are capillary heat pipes, the condensation section (74) being located radially outwards with respect to the evaporation section (72), and connected to the latter by an adiabatic area (76) of a heat pipe extending radially outward from the evaporation section (72) towards the condensation section (74).

3. The turbine engine according to claim 1 or 2, **characterised in that** the heat pipes (70) are circumferentially distributed around a longitudinal central axis (3) of the turbine engine.

4. The turbine engine according to any one of the preceding claims, **characterised in that** each of the heat pipes (70) has a U-like general shape, with the two end branches of the U respectively forming the evaporation section (72) and the condensation section (74).

5. The turbine engine according to any one of the preceding claims, **characterised in that** for some of said heat pipes (70), the condensation section (74) is fastened on the inner wall (36) delimiting the air flow path, and for the other ones, the condensation section (74) is fastened on the inner upstream boundary wall (44) of the secondary flow path (16).

6. The turbine engine according to any one of the preceding claims, **characterised in that** the gas generator (17) is indirectly coupled to the fan (2), via a speed reducer (26).

7. The turbine engine according to the preceding claim, **characterised in that** the generator/motor (34) is arranged axially between the fan (2) and the speed reducer (26).

8. The turbine engine according to the preceding claim, **characterised in that** the rotor (52) of the generator/motor (34) is coupled in rotation to an output member (28) of the speed reducer (26), this output member (28) of the reducer itself being coupled in rotation to a fan rotary hub (30).

9. The turbine engine according to any one of the preceding claims, **characterised in that** the condensation section (74) of each heat pipe (70) extends over the entire length or substantially the entire length of its associated inner boundary wall (36, 44).

10. The turbine engine according to any one of the preceding claims, **characterised in that** the stator portion (60) of the turbine engine, on which the stator support (56) of the generator/motor (34) is fastened, is a casing on which the inlet guide vanes (40) of the primary flow path (14) are mounted.
